# EUROPÄISCHE PATENTSCHRIFT

(11) **EP 0 624 559 B1**
(45) Veröffentlichungstag und Bekanntmachung des Hinweises auf die Patenterteilung: **05.02.1997**
(21) Anmeldenummer: 94104658.3
(22) Anmeldetag: 24.03.1994
(51) Int. Cl.: C04B 35/10, C04B 35/56, C04B 35/80, B22D 41/32, B22D 41/54

(54) **Verfahren zur Herstellung von feuerfesten kohlenstoffgebundenen Formkörpern**
Method of making refractory carbon-bonded bodies
Procédé de fabrication de corps réfractaires liés par carbone

(30) Priorität: 11.05.1993 DE 4315690
(43) Veröffentlichungstag der Anmeldung: 17.11.1994
(73) Patentinhaber: DIDIER-WERKE AG, 65189 Wiesbaden (DE)
(72) Erfinder: Strohmayer, Rudolf, D-95615 Marktredwitz (DE); Ritter, Werner, D-56182 Urbar (DE); Muschner, Udo, D-47918 Tönisvorst (DE); Hoffmann, Carl, D-95615 Marktredwitz (DE)
(74) Vertreter: Brückner, Raimund, Dipl.-Ing.

(56) Entgegenhaltungen:
- CHEMICAL ABSTRACTS, vol. 111, no. 24, 11. Dezember 1989, Columbus, Ohio, US; abstract no. 218431, H. SHITANI ET AL. 'Nonfired refractories for sliding nozzle plates' & JP-A-01 111 780 (KAWASAKI REFRACTORIES CO., LTD.) 28. April 1989
- DATABASE WPI Week 7820, Derwent Publications Ltd., London, GB; AN 78-35646A 'Dipping nozzle for continuous casting appts.' & JP-A-53 037 138 (TOSHIBA CERAMICS KK.) 6. April 1978
- DATABASE WPI Week 9014, Derwent Publications Ltd., London, GB; AN 90-102191 'Carbon-contg. refractory for torpedo ladles' & JP-A-02 051 474 (KUROSAKI REFRACT. KK. ET AL.) 21. Februar 1990
- DATABASE WPI Week 7904, Derwent Publications Ltd., London, GB; AN 79-06917B 'Heat resistant sheet based on carbon fibre' & JP-A-53 142 994 (TORAY INDS. INC.) 13. Dezember 1978

## Beschreibung

Die Erfindung betrifft ein Verfahren zur Herstellung von feuerfesten kohlenstoffgebundenen Formkörpern für Verschleißteile beim Vergießen von Stahlschmelze, insbesondere als Düse, Ausguss und Platten für Schieberverschlüsse, wobei eine Mischung mit feuerfestem körnigen Al₂O₃-reichen Material und/oder Siliciumcarbid, calcinierter Tonerde und einem kohlenstoffhaltigen Binder geformt, wärmebehandelt und evtl. mit kohlenstoffhaltigem Material getränkt wird.

Nach DE-C-29 43 926 ist ein feuerfestes gegen Korrosion und Temperaturwechsel beständiges Material für Düsen oder Platten beim kontinuierlichen Gießen bekannt, bei dessen Herstellung Phenolharz als in der Wärme härtbares Bindemittel eingesetzt wird (S. 3, 28-30). In der Ausgangsmischung wird ein überwiegender Anteil feuerfester Substanz wie gesinterter körniger Korund und Mullit und ferner pulverförmiges Aluminium verwendet, wodurch eine erhöhte Festigkeit bei Temperaturen im Bereich von 800 - 1000°C erreicht werden. Der Einsatz von Phenolharz stellt aber bei der Verarbeitung und Erhitzung eine die menschliche Gesundheit und die Umwelt schädigende Maßnahme dar.

Bei einem ungebrannten feuerfesten Körper für den Einsatz als Schieberplatte auf der Basis von Al₂O₃-reichem Material und Harz oder Pech als Bindemittel wird durch den Zusatz von verschiedenen Fasern eine hohe Beständigkeit gegen Rißbildung angestrebt (JP-A-01111780).

Die Aufgabe nach der Erfindung besteht in einem Verfahren, bei dem mit einem gesundheitlich verträglichen organischen Binder als Bindemittel feuerfeste kohlenstoffgebundene Formkörper der eingangs genannten Art mit hoher Festigkeit erreicht werden sollen.

Nach der Lösung wird als kohlenstoffhaltiger Binder 3 - 10 Gew.% modifizierte Maisstärke (Quellstärke) und 0,1 - 1 Gew.% Kohlenstoffasern, jeweils bezogen auf die Menge des trockenen feuerfesten Materials, eingesetzt. Durch das Zusammenwirken von modifizierter Maisstärke und Kohlenstoffasern wird eine ausreichend hohe Festigkeit des im Verfahren geformten und danach getrockneten Formkörpers und des kohlenstoffgebundenen Formkörpers am Ende des Verfahrens erreicht. Ferner kann nun in vorteilhafter Weise nach der Formgebung des Körpers eine einfache Trocknung bei niedrigen Temperaturen vorgenommen werden, und es tritt zugleich eine Verminderung der gesundheitsschädlichen Stoffe im Verfahren ein. Lediglich mit modifizierter Maisstärke allein wird eine ausreichende Festigkeit der Formkörper nicht erhalten.

Bei einem zugesetzten Anteil unter 3 Gew.% modifizierte Stärke wird keine ausreichende Festigkeit der Formkörper erreicht und bei einem Anteil der Stärke von über 7 Gew.% wie auch bei über 1 Gew.% Kohlenstoffasern nimmt die Dichte und die Gefügefestigkeit des Formkörpers in nachteiliger Weise ab.

Vorteilhaft besitzt die modifizierte Maisstärke ein Molekulargewicht (Molmasse) bis 2000 oder über 100 000. Die Maisstärke mit dem niedrigen Molekulargewicht kann auch mit der Maisstärke mit hohem Molekulargewicht im Gewichtsverhältnis von 50 - 90 : 10 - 50 % verwendet werden.

Nach der weiteren vorteilhaften Ausgestaltung des Verfahrens beträgt der Zusatz von Kohlenstoffasern 0,2 - 0,5 Gew.%. Ferner kann feinteiliger Kohlenstoff, wie insbesondere 0,5 - 2 Gew.% Ruß zugefügt werden.

Desweiteren kann bei dem Verfahren der Zusatz von 1 - 5 Gew.% elementarem feinkörnigem Silicium und/oder 0,5 - 5 Gew.% feinkörnigem Aluminium vorgenommen werden. Durch diese für sich bereits bekannte Maßnahme werden die Eigenschaften Festigkeit und Oxidationsbeständigkeit des Formkörpers während des Einsatzes bei hohen Temperaturen verbessert.

Das Verfahren nach der Erfindung sieht vor der bekannten Imprägnierung der Formkörper mit Teer lediglich die Trocknung der Formkörper bei 130 - 150°C vor. Die Imprägnierung findet nach dem Verfahren der Vakuumdruckimprägnierung im Bereich von 220°C statt. Als Imprägniermittel ist Steinkohlenteer mit einem Erweichungspunkt nach Kraemer-Sarnow von etwa 70°C und einem Verkokungsrückstand nach Conradson von 35-42 Gew.% geeignet. An die Imprägnierung schließt sich der Verfahrensschritt Tempern in neutraler oder reduzierender Atmosphäre bei Temperaturen bis zu 500°C an. Die beim Tempervorgang entstehenden Gase müssen eine Nachbehandlung z.B. durch Verbrennen unterzogen werden, um die Abgabe gesundheitsschädlicher Stoffe in die Atmosphäre möglichst gering zu halten.

Gegebenenfalls kann zur weiteren Steigerung des Gehaltes an Kohlenstoff in dem Formkörper der Vorgang der Imprägnierung und Temperung der Formkörper wiederholt werden.

Bei der Herstellung der Formkörper wird zu der Mischung der Komponenten einschließlich der Kohlenstoffasern zum Schluß der kohlenstoffhaltige Binder, Wasser und evtl. feuerfester Ton hinzugefügt. Der kohlenstoffhaltige Binder kann dabei als trockenes Pulver oder als wässrige Lösung mit z.B. 70 % Feststoffgehalt vorliegen.

Das Verfahren zur Herstellung der feuerfesten kohlenstoffgebundenen Formkörper nach der Erfindung wird durch die folgenden Beispiele näher erläutert. Die Mischung wird jeweils mit einem Pressdruck von 100 N/m² zu Schieberplatten verpreßt. Die bei 130°C getrockneten Schieberplatten werden in üblicher Weise bei 220°C mit Steinkohlenteer (EP bei 70°C) imprägniert und anschließend bei 450°C getempert. An den nach zweimaliger Imprägnierung erhaltenen kohlenstoffgebundenen Formkörpern werden die Eigenschaften ermittelt. Die Biegefestigkeit und Heißbiegefestigkeit wird an Prüfkörpern der Abmessungen 25 x 25 x 150 mm durchgeführt. Zur Ermittlung der Heißbiegefestigkeit werden die Prüfkörper in einem auf 1400°C aufgeheizten Ofen eingesetzt und nach einer Verweilzeit von 8 Minuten geprüft.

Durch die Beispiele nach der Erfindung wurden Schieberplatten mit vorteilhaftem Gehalt an Restkohlenstoff und guten Festigkeiten erhalten.

| | Gew% | Beispiele | | | |
|---|---|---|---|---|---|
| | | 1 | 2 | 3 | 4 |
| Korund | 0,5 - 1,5 mm Gew% | 25 | 25 | 25 | 25 |
| Sintermullit | 0,5 - 1,5 mm Gew% | 25 | 25 | 25 | 25 |
| Korund | 0,09- 0,5 mm Gew% | 10 | 10 | 10 | 10 |
| Korund calcinierte | 0 - 0,09mm Gew% | 23 | 23 | 23 | 23 |
| Tonerde | 0 - 0,04mm Gew% | 12 | 12 | 12 | 12 |
| feuerfester Ton (42 % Al₂O₃) | | 5 | 5 | 5 | 5 |
| Kohlenstoffasern | Gew% | + 0,15 | + 0,4 | + 0,4 | + 0,4 |
| Ruß | 0 - 0,04mm Gew% | | | + 1,5 | + 1,5 |
| mod.Maisstärke (Molmasse unter 2000) Lösung 70 % Feststoffgehalt | Gew% | + 5 | + 5 | + 5 | + 5 |
| mod.Maisstärke (Molmasse über 100.000) trockenes Pulver | Gew% | | + 1 | | |
| Silicium | 0 - 0,04mm Gew% | | | | + 3 |
| Aluminium | 0 - 0,04mm Gew% | | | | + 1 |
| Rohdichte g/cm³ | | 2,92 | 2,92 | 2,91 | 2,91 |
| Porosität offene Vol.% | | 6,4 | 6,4 | 6,5 | 6,5 |
| Restkohlenstoffgehalt | Gew% | 6,1 | 6,1 | 6,4 | 6,5 |
| Biegefestigkeit N/mm² | | 15 | 17 | 19 | 20 |
| Heißbiegefestigkeit 1400°C N/mm² | | 9 | 11 | 12 | 12 |

## Patentansprüche

1. Verfahren zur Herstellung von feuerfesten kohlenstoffgebundenen Formkörpern für Verschleißteile heim Vergießen von Stahlschmelze, insbesondere als Düse, Ausguss und Platten für Schieberverschlüsse, wobei eine Mischung mit feuerfestem körnigen Al₂O₃-reichen Material und/oder Siliciumcarbid, calcinierter Tonerde und einem kohlenstoffhaltigen Binder geformt, wärmebehandelt und evtl. mit kohlenstoffhaltigem Material getränkt wird,
dadurch gekennzeichnet,
daß 3 - 10 Gew.% modifizierte Maisstärke als kohlenstoffhaltiger Binder und 0,1 - 1 Gew.% Kohlenstoffasern, jeweils bezogen auf die Menge des trockenen feuerfesten Materials, verwendet werden.

2. Verfahren nach Anspruch 1,
dadurch gekennzeichnet,
daß modifizierte Maisstärke mit niedrigem Molekulargewicht (Molmasse unter 2000) verwendet wird.

3. Verfahren nach Anspruch 1,
dadurch gekennzeichnet,
daß modifizierte Maisstärke mit hohem Molekulargewicht (über 100 000) verwendet wird.

4. Verfahren nach dem Anspruch 2 und 3,
dadurch gekennzeichnet,
daß modifizierte Maisstärke der Molmasse unter 2000 und modifizierte Maisstärke der Molmasse über 100.000 im Gewichtsverhältnis von 50 - 90 : 10 - 50 % verwendet werden.

5. Verfahren nach Anspruch 1,
dadurch gekennzeichnet,
daß ein Zusatz von 0,2-0,5 Gew.% Kohlenstoffasern verwendet wird.

6. Verfahren nach Anspruch 1,
dadurch gekennzeichnet.
daß ein Zusatz von 0,5-2 Gew.% Ruß verwendet wird.

7. Verfahren nach Anspruch 1,
dadurch gekennzeichnet,
daß ein Zusatz von 1 - 5 Gew.% elementarem feinkörnigen Silicium und/oder 0,5 - 5 Gew.% feinkörnigem Aluminium verwendet wird.

8. Verfahren nach Anspruch 1,
dadurch gekennzeichnet,
daß die aus der Mischung geformten Körper vor der Imprägnierung mit Teer bei 130 - 150°C getrocknet werden.

## Claims

1. A method of manufacturing refractory, carbon-bonded shaped bodies for wear parts in the pouring of molten steel, particularly in the form of a nozzle, discharge and plates for sliding gate valves, in which a mixture with refractory, granular Al₂O₃-rich material and/or silicon carbide, calcined alumina and a carbon-containing bonder is shaped, heat treated and possibly impregnated with carbon-containing material, characterised in that 3 - 10 wt.% modified maize starch, constituting the carbon-containing bonder and 0.1 - 1 wt.% carbon fibres are used, in each case with respect to the amount of the dry, refractory material.

2. A method as claimed in claim 1, characterised in that modified maize starch is used with a low molecular weight (molar mass less than 2000).

3. A method as claimed in claim 1, characterised in that modified maize starch is used with a high molecular weight (above 100,000).

4. A method as claimed in claim 2 and 3, characterised in that modified maize starch with a molar mass less than 2000 and modified maize starch with a molar mass above 100,000 are used in the weight ratio of 50 - 90 : 10 - 50%.

5. A method as claimed in claim 1, characterised in that an addition of 0.2 - 0.5 wt.% carbon fibres is used.

6. A method as claimed in claim 1, characterised in that an addition of 0.5 - 2 wt.% soot is used.

7. A method as claimed in claim 1, characterised in that an addition of 1 - 5 wt.% elemental, fine grained silicon and/or 0.5 - 5 wt.% fine grained aluminium is used.

8. A method as claimed in claim 1, characterised in that the bodies shaped from the mixture are dried before impregnation with tar at 130 - 150°C.

## Revendications

1. Procédé pour la fabrication de pièces moulées réfractaires liées par carbone, pour pièces d'usure destinées à la coulée d'acier fondu, en particulier pour des buses, busettes et plaques pour obturateurs coulisants, procédé dans lequel un mélange d'un matériau granuleux réfractaire riche en Al₂O₃ et/ou de carbure de silicium, d'argile calcinée et d'un liant carboné, est mis en forme, soumis à un traitement thermique et imprégné éventuellement avec un matériau carboné, caractérisé en ce que l'on utilise, comme liant carboné, de 3 à 10% en poids d'amidon de maïs modifié et de 0,1 à 1 % en poids de fibres de carbone, rapporté à la quantité de matériau réfractaire sec.

2. Procédé conforme à la revendication 1, caractérisé en ce que l'on utilise de l'amidon de maïs modifié à faible poids moléculaire (masse molaire inférieure à 2000).

3. Procédé conforme à la revendication 1, caractérisé en ce que l'on utilise de l'amidon de maïs modifié de haut poids moléculaire (supérieur à 100 000).

4. Procédé conforme à la revendication 2 et 3, caractérisé en ce que l'on utilise de l'amidon de maïs modifié de masse molaire inférieure à 2000 et de l'amidon de maïs modifié de masse molaire supérieure à 100 000 en un rapport en poids compris entre 90/10 et 50/50.

5. Procédé conforme à la revendication 1, caractérisé en ce que l'on utilise, comme additif, de 0,2 à 0,5 % en poids de fibres de carbone.

6. Procédé conforme à la revendication 1, caractérisé en ce que l'on utilise, comme additif, de 0,5 à 2 % en poids de suie.

7. Procédé conforme à la revendication 1, caractérisé en ce que l'on utilise, comme additif, de 1 à 5 % en poids d'une poudre fine de silicium et/ou de 0,5 à 5 % en poids d'une poudre fine d'aluminium.

8. Procédé conforme à la revendication 1, caractérisé en ce que les pièces moulées à partir du mélange sont séchées à une température comprise entre 130 et 150 °C avant d'être imprégnées avec du goudron.
